# EUROPEAN PATENT SPECIFICATION

(11) **EP 2 353 975 B1**
(45) Date of publication and mention of the grant of the patent: **19.06.2013**
(21) Application number: 11151087.1
(22) Date of filing: 17.01.2011
(51) Int. Cl.: B62D 55/075

(54) **Device for damping out of bumps in a tracked vehicle and an associated tracked vehicle**
Vorrichtung zur Dämpfung von Erschütterungen eines Kettenfahrzeugs und zugehöriges Kettenfahrzeug
Dispositif de suppression de bosses d'un véhicule chenillé et véhicule chenillé correspondant

(30) Priority: 02.02.2010 IT TO20100071
(43) Date of publication of application: 10.08.2011
(73) Proprietor: Oto Melara S.p.A., 19136 La Spezia (IT)
(72) Inventor: La Spina, Giovanni, 19124, La Spezia (IT)
(74) Representative: Di Gennaro, Sergio

(56) References cited:
- EP-A1- 0 423 013
- DE-A1-102004 010 089
- FR-A1- 2 610 885
- JP-A- 7 081 634
- JP-A- 7 101 363
- JP-A- 2006 327 228

## Description

The present invention relates to an extinguishing device and particularly it relates to a device for extinguishing bumps of a tracked vehicle, and to an associated tracked vehicle.

It is known that the tracked vehicles can meet flights of stairs, steps or in general obstacles at which significant bumps can occur.

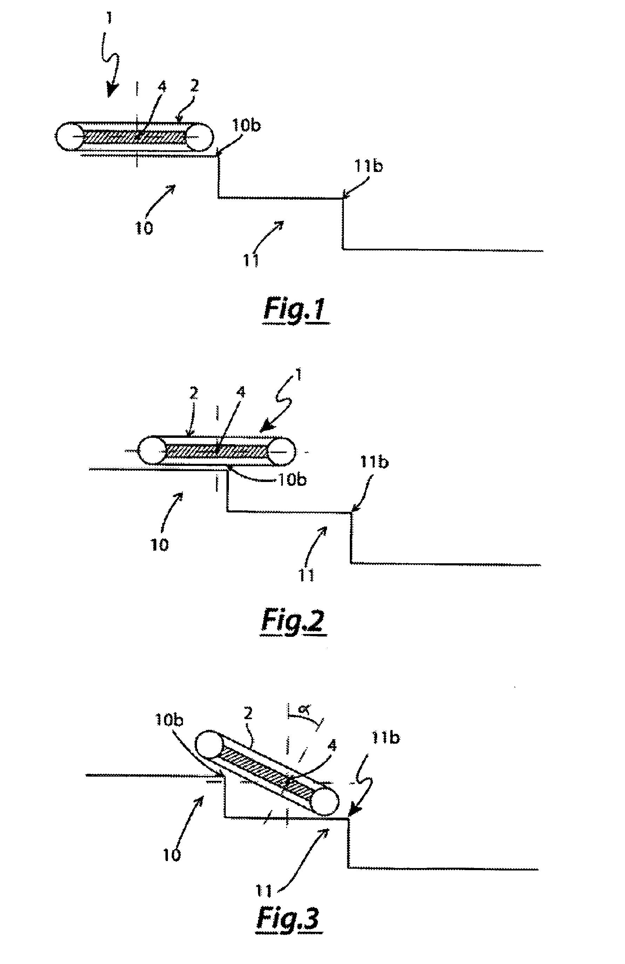

In detail, as shown in figure 1, tracked vehicles 1 are provided with a pair of parallel tracks 2 respectively disposed on the left and right side of tracked vehicle 1; tracks 2 are actuated by at least a toothed driving pulley 3, typically positioned on the front or rear end of track 2 itself. tracked vehicle 1 has also its own centre of gravity 4, which is positioned at a first distance 11 from a front end 2a of tracks 2 and at a second distance 12 from a rear end 2b of tracks 2. When a tracked vehicle faces a flight of stairs, as shown in figure 1, until the centre of gravity 4 does not exceed an edge 10b of a first step 10 of the flight of stairs, tracked vehicle 1 remains with the base of the track parallel to a plane 20 on which the vehicle itself moves.

On the contrary, as shown in figures 2 and 3 which represent tracked vehicle 1 in two subsequent instants of time in sequence, when centre of gravity 4 overcomes edge 10b of first step 10 of the flight of stairs, tracked vehicle 1 undergoes a pitch by rotating in the direction of the slope of the flight of stairs, and tilts respectively towards a front or rear portion with an angle α(figure 3) until the base of tracks 2 does not rest upon one or more edges 11b of subsequent steps.

In particular, the greater the mass of the tracked vehicle 1, and the greater the slope of the flight of stairs or, more generally, the height difference introduced by the obstacle, the greater the extent of the backlash suffered by tracked vehicle 1 in order to overcome the obstacle itself.

In particular, if tracked vehicle 1 is provided with sophisticated equipment, the drawback arises that in any way it is necessary to dampen or compensate the inclination of the equipment on board, in order not to cause damages or malfunctions.

Furthermore, in the case that inside the tracked vehicle 1 persons are present and one of its cabs for hosting the crew is not damped, the bump induced on tracked vehicle 1 further turns in a discomfort for the persons themselves, who can be in danger by hitting against the interior of the vehicle.

This drawback is even the greater, the harder the operative conditions in which tracked vehicle 1 moves, and they are in particular strongly present when tracked vehicle 1 is a vehicle supplied to the Army, which typically operates in morphologically particularly hostile environments.

Is also known a stairs ascendable and descendible work vehicle. Said vehicle comprise a gravity center moving mechanism, comprising a four-section link mechanism to support this vehicle. This gravity center moving mechanism can be housed in a folding up condition.

Document JP 07 081 063 discloses the subject-matter of the preambule of the independent claims.

A first aim of the present invention is to describe an extinguishing device of bumps of a tracked vehicle which does not have the above described drawbacks.

A second aim of the present invention is to describe a tracked vehicle which does not have the above described drawbacks.

According to the present invention an extinguishing device of bumps of a tracked vehicle is realized, as claimed in the first claim.

According to the present invention a tracked vehicle is also realized as claimed in claim 8.

The invention will be now described with reference to the annexed drawings, showing a non limitative example of embodiment, in which:
- figure 1 shows a tracked vehicle of a known type, facing an obstacle schematically represented as a flight of stairs, in a first position;
- figure 2 shows a tracked vehicle of a known type, facing the obstacle in figure 1, in a second subsequent position;
- figure 3 shows the tracked vehicle of a known type, facing the obstacle of figure 1, in a third subsequent position;
- figure 4 shows a perspective view of the detail of the extinguishing device according to the present invention;

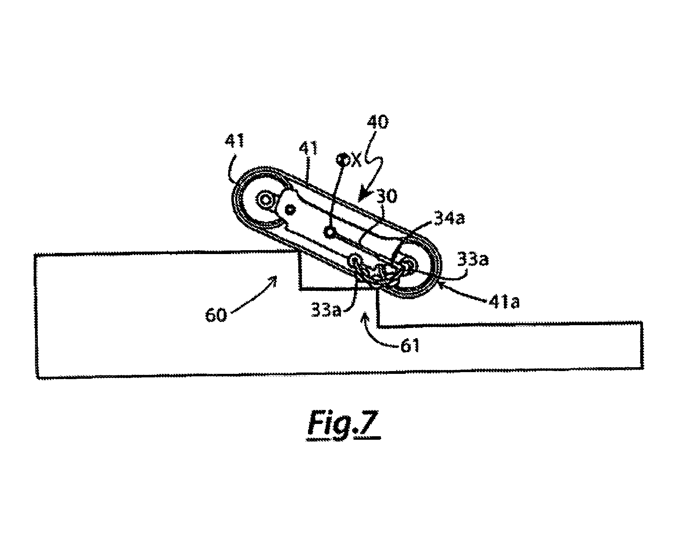

- figures 5-7 show a tracked vehicle provided with an extinguishing device of bumps according to the present invention, facing an obstacle downhill, respectively in a first, second and third position; and
- figures 8-13 show the tracked vehicle provided with an extinguishing device of bumps according to the present invention, facing an obstacle uphill respectively in a first, second, third, fourth, fifth, sixth position.

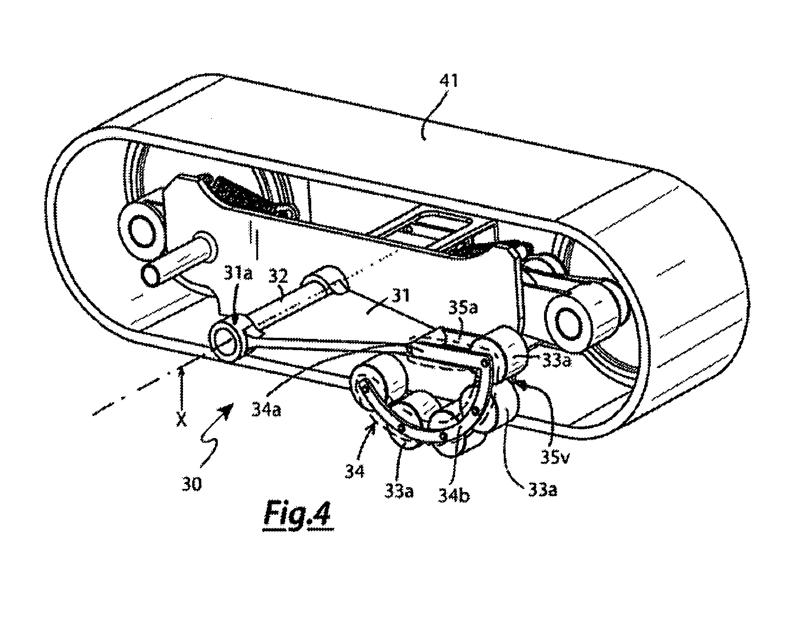

With reference to figure 4, 30 indicates in the whole an extinguishing device of bumps of a tracked vehicle.

Device 30 is installed on a tracked vehicle 40, schematically represented for one of its lower portions in which tracks 41 are present. In detail, tracked vehicle 40, which for example can be a tracked vehicle for the transport of troops , a tank or a bridge building vehicle, is provided with a pair of tracks 41, mutually parallel and respectively disposed on its left and right side; tracks 41 are rotated by means of at least a toothed driving pulley 43, typically positioned on the front rear end of track 41 itself and actuated by an electric motor or of the endothermic type. Tracked vehicle 40 has also its own centre of gravity 50 which is positioned at a first distance d1 from a front end 41a of tracks 41 and at a second distance d2 from a rear end 41b of tracks 41.

Device 30 is designed for reducing the shocks or bumps derived by the overcoming, by tracked vehicle 40, of obstacles with a shape of steps or similar.

As illustrated in figure 4, device 30 which is the subject of the present invention comprises a rigid arm 31, made of a metal material and/or of an aramid fibre, having a first end 31a on which a shaft 32 is centred, disposed with a respective own axis X parallel to a rotation axis of tracks 41 and perpendicular to the direction along which tracked vehicle 40 moves. Rigid arm 31, therefore is able to rotate around shaft 32 and consequently, around axis X.

In particular, device 30 is preferably installed for each track 41 of tracked vehicle 40; therefore, in its preferred configuration, it is mounted on both track 41 at the left and track 41 at the right. Rigid arm 31 has also a second end 31b on which a support element 33 is fixed through a plurality of rolls 33a.

At its first end 31a of rigid arm 31 device 30 has a first maximum width, and is tapered in a substantially linear way when approaching its second end 31b; observed from above, therefore, rigid arm 31 has a substantially triangular shape. This configuration allows a great stiffness of rigid arm 31, which - under the weight of tracked vehicle 40 - must be bent as little as possible.

In particular, support element 33 comprises a first and second bracket 34, 35 each having a first portion 34a, 35a rectilinear and fixed, at its first end, to the second end 31b of rigid arm 31 and a second portion 34b, 35b semicircular and fixed to a second end of first portions 34a, 35a opposite to the first end.

The first and second bracket of support element 33 are so mounted to lay on two parallel planes, perpendicular to axis X, and are mutually spaced with such a width to house at their inside the plurality of rolls 33a which are mounted along second portions 34b, 35b and are able to rotate on at least one portion of the obstacle to overcome. Rolls 33a rotate with their respective axis parallel to axis X.

On rigid arm 31 further an extinguishing and pushing device acts (like for example an air piston and/or a damper), non illustrated, which pushes second end 31b and consequently rolls 33a downwards and i.e. with a pushing force directed along an axis which can rotate on a plane orthogonal to the axis around which rolls 33a rotate. In particular, the extinguishing and pushing device is so installed that one of its ends is centred on a support element fixed to second end 31b of rigid arm 31, whereas one of its further ends, opposed to the previous one, is bound to the structure of tracked vehicle 40.

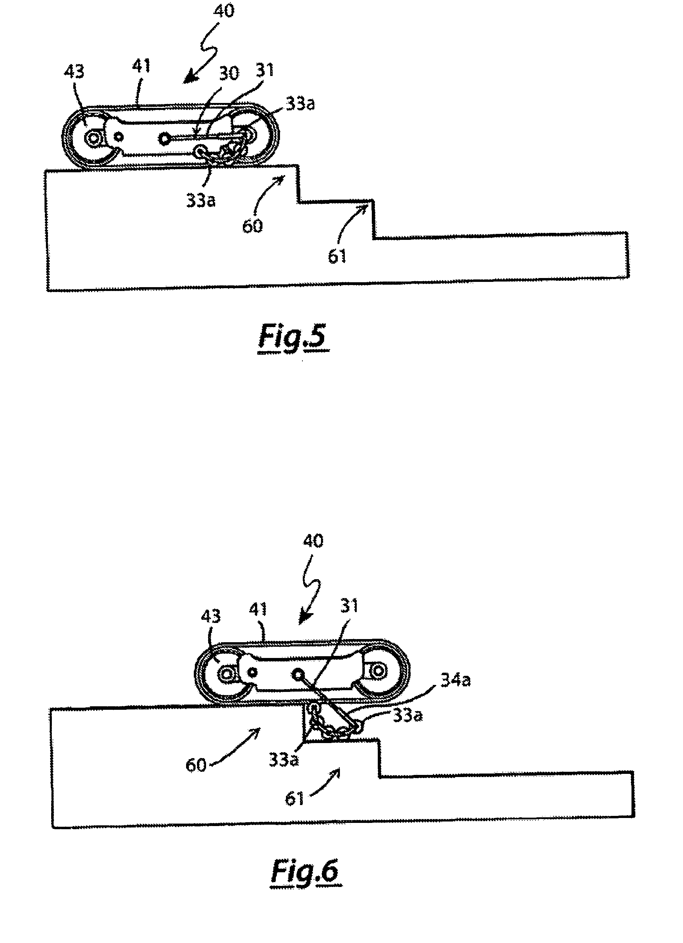

As illustrated in figure 5, when tracked vehicle 40 begins to overcome an obstacle as a step like the flight of stairs represented in figure, until centre of gravity 50 of tracked vehicle 40 does not cross an edge 60a of a first step 60, the base of tracks 41 remains parallel to the ground and device 30 rests on the ground itself through one or more rolls 33a, which are in a more advanced position with respect to the horizontal distance between centre of gravity 50 and the front end of tracks 41.

When on the contrary tracked vehicle 40 approaches edge 60a, rolls 33a which are pushed downwards by the force of the damper begin to overcome first step 60 and rest upon the underlying ground or, as it is represented in figure, on a second step 61.

So when centre of gravity 50 overcomes edge 60a of first step 60, tracked vehicle 40 tends to pitch until the front end of tracks 41 does not rest onto the underlying ground or on second step 61, but the damper permits its control during its movement downhill, by braking the pitch and so damping the rebound that tracked vehicle 40 suffers when tracks 41 rest on second step 61 or on the ground.

On the contrary, when tracked vehicle 40 must face an obstacle uphill, the device according to the present invention acts as follows.

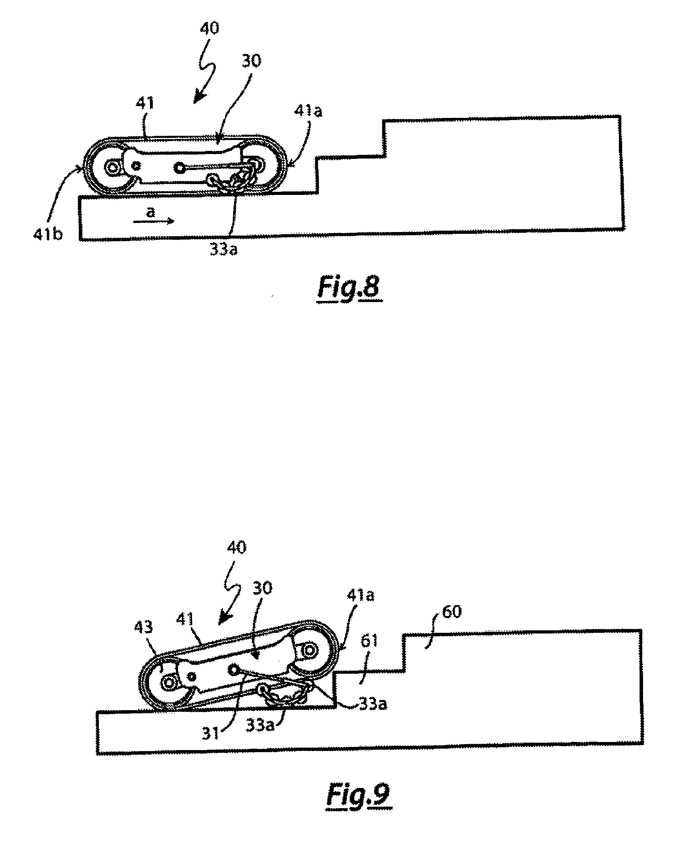

In order to better show the behaviour of the aforementioned device, the obstacle is shown by an example in figures 8-13 as a flight of stairs uphill, comprising a plurality of steps 60, 61.

As illustrated in figure 8, tracked vehicle 40 approaches the obstacle along a planar path, in the direction indicated by the arrow, until front end 41a of tracks 40 does not meet second step 61; at this point, the track, with its pushing force exerted on the ground preceding the obstacle, engages the edge of second step 61 and begins to overcome it, as illustrated in figure 9. At the same time, rigid arm 31 is pushed downwards from the damper, so that rolls 33a continue maintaining their contact with the ground and with the obstacle itself.

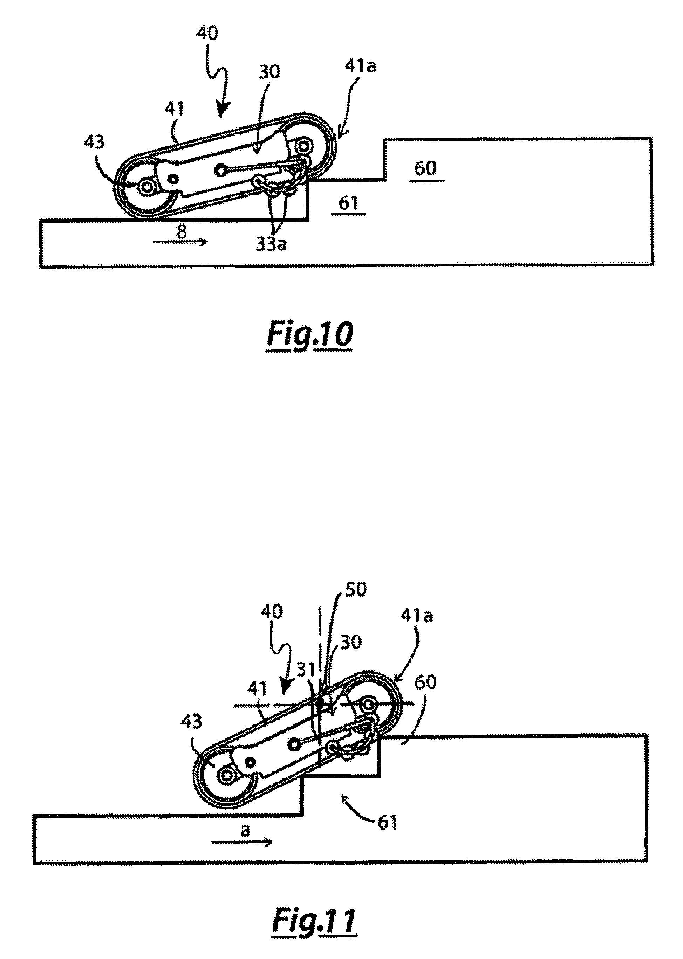

As illustrated in figure 10, tracked vehicle 40 continuing its movement, even rolls 33a approach second step 61, separating from the ground and causing a compression of the damper.

Continuing the movement, tracked vehicle 40 reaches a condition in which its centre of gravity 50 overcomes the edge of second step 61; in this condition rigid arm 31 is pushed once more downwards (in the case of the obstacle illustrated in figure, on the upper portion of step 61) in order to avoid an unopposed rolling of tracked vehicle 40 itself.

So tracked vehicle 40, as illustrated in figure 11, has to face also a first step 60, positioned at a height greater than that of second step 61; also in this case rolls 33a, when coming in contact with a vertical wall of step 60 itself, raise from second step 61, so causing a compression of the damper.

It is important to observe that the semicircular shape of second portions 34b, 35b of brackets 34, 35 on which rolls 33a are centred, is such that also in presence of obstacles having a very clear shape, there is no snapping of rolls 33a on the obstacle itself.

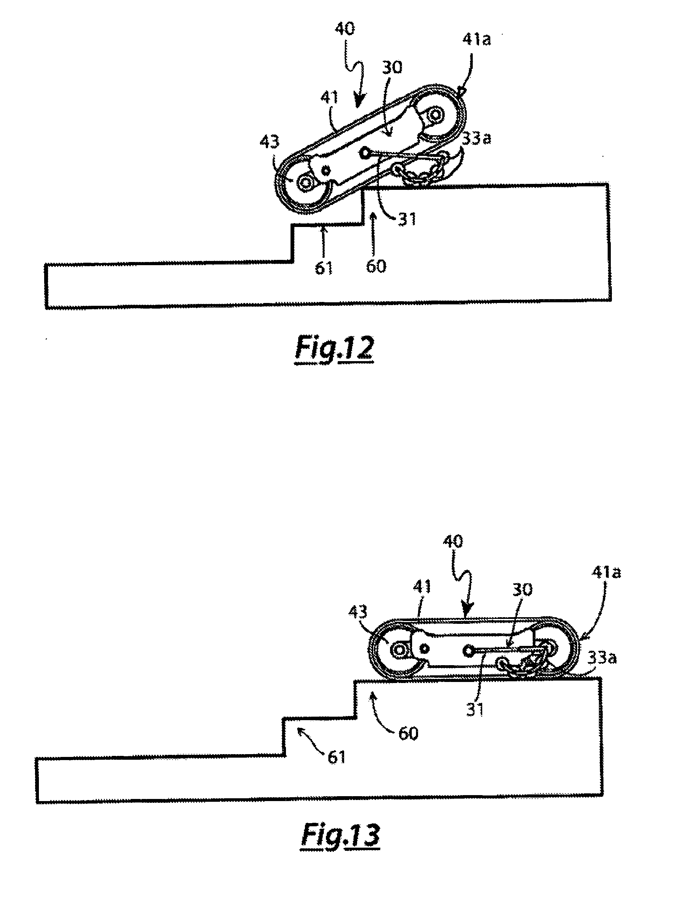

As illustrated in figure 12, when tracked vehicle 40 has overcome also first step 60, it must face a planar surface which, without device 30 would cause a sudden pitch when centre of gravity 50 of the vehicle overcomes edge 60a of first step 60.

The case just described is really the one illustrated in figure 12; centre of gravity 50 of tracked vehicle 40 goes in fact a little beyond edge 60a of first step 60.

Rolls 33a were always contacting the surface of the obstacle and just before the centre of gravity 50 overcomes edge 60a of first step 60, they still were on upper planar surface 60b of the obstacle and when overcoming edge 60a by centre of gravity 50, the damper causes a slowing pitch of tracked vehicle 40, until reaching a stable position in which a lower portion of tracks 41 rests completely onto planar surface 60b, which situation is illustrated in figure 13.

Also in this case, rolls 33a continue to be pushed downwards, or towards surface 60b, so that in the case tracked vehicle 40 has to face a new obstacle uphill or downhill, the operating conditions previously described will occur once more.

Alternatively to what was described, device 30 can also be installed with a quantity greater than one for each track 41. In particular, a configuration in which for each track 41 a first device 30 is present extending towards a front region of tracked vehicle 40 and a second device 30, which operates in the same way but with a mirror-like shape, instead extending towards a rear region of tracked vehicle 40, permits an efficient damping of the shocks caused by the overcoming of obstacles both during the forward and rearward drive.

In both cases the operation and the actuation of device 30 do not change with respect to what was described until now.

The advantages of the extinguishing device of bumps 30 of a tracked vehicle 40 are known according to the preceding description. In particular, it permits to avoid uncontrolled pitching events of tracked vehicle 40 on which it is installed, independently on the type and shape of an obstacle which tracked vehicle 40 will have to face.

Such advantage is the greater, the greater the mass of tracked vehicle 40 is and the greater the payload of the vehicle itself, being it made of people or delicate instruments, which is potentially sensible to uncontrolled pitch events.

It is finally clear that to the device which is the subject of the present invention some variations can be applied, modifications or additions obvious for an expert skilled in the art, without for this reason departing from the protection range given by the annexed claims. More specifically, the rolls can be substituted with equivalent rotary means, as for example wheels or an idling track, or by sliding means, like for example a low friction carriage without rotary elements. Even in the case of the presence of the carriage in place of the rolls, the damper is able to exert a pushing force towards the ground.

The reason for that the device which is the subject of the present industrial invention was until now described as being installed for each track 41 of tracked vehicle 40, must not be understood in a limitative way. In fact, installations of device 30 are also possible on a number of tracks lower than the whole of tracks of tracked vehicle 40.

Rigid arm 31 can have different shapes with respect to that described until now (substantially triangular shape in a plan view),provided that they are globally provided with a stiffness sufficient to have a very low bending under the weight of tracked vehicle 40.

## Claims

1. An extinguishing device (30) of bumps of a tracked vehicle (40) having a plurality of tracks (41);
the device (30), designed for reducing the shocks or bumps derived by the overcoming by the tracked vehicle (40) of obstacle with a shape of step or similar, being installed at least at a portion of said plurality of tracks (41) of said cracked vehicle (40);
said device (30) comprises:
• a rotary rigid arm (31) having a first end (31a) on which a shaft (32) is centered, disposed with a respective axis (X), around which said arm (31) is • able to rotate, parallel to a rotation axis of tracks(41) and perpendicular to the direction along with tracked vehicle moves and
• a plurality of low fiction means (33a) installed on a second end (31b) of said arm (31);
said low friction means (33a):
- being designed for resting upon at least a portion of an obstacle to said tracked vehicle (40); and
- being positioned between the two ends of a track (41), at a distance with respect to an end of said tracks (41) smaller than the distance of a centre of gravity of said tracked vehicle (40) from said end of said tracks (41);
- are rotary means able to rotate on respective axes parralel to said axis (x)
**characterized in that** said low friction means (33a) are fixed to said second end (31b) of rotary arm (31) by a support element (33) comprising a first and second bracket (34, 35) each having a first portion (34a, 35a) rectilinear and a second portion semicircular (34b, 35b), and fixed to a second end of the first portion (34a, 35a);
said first and second bracket are mounted to lay on two mutually spaced parallel planes perpendicular to said axis (X), in order to house said low friction means which are mounted along said second portion (34b, 35b).

2. Device according to claim 1, in which said rotary means (33a) are rolls.

3. Device according to claim 1, in which said rotary means (33a) are wheels.

4. Device according to claim 1, in which said rotary means (33a) rotate on a respective axis parallel to the rotation axis of said tracks (41).

5. Device according to claim 1, also comprising an extinguishing and pushing device (10), for exerting a pushing force on said rotary means (33a); said pushing force being oriented in a direction orthogonal with respect to the direction given by a rotation axis of said arm (31).

6. Device according to claim; 1, in which said low friction means are sliding means.

7. Device according to claim 6, also comprising an extinguishing and pushing device, for exerting a pushing force on said sliding means.

8. A tracked vehicle (40) comprising:
- at least one pair of tracks (41), mutually parallel and respectively placed on a left side and or. a right side of said tracked vehicle (40);
- a driving pulley for the rotation of said tracks (41); and
- a centre of gravity (50), positioned at a first distance (d1) from a front end (41a) of said tracks (41) and at a second distance (d2) from a rear end (41b) of said tracks (41);
the tracked vehicle (40) comprises an extinguishing device (30) of bumps, designed for reducing the shocks or bumps derived by the overcoming by the tracked vehicle (40) of obstacle with a shape of step or similar, comprising:
• a rotary rigid arm (31) and having a first end (31a) on which a shaft (32) is centered, disposed with a respective axis (X), around which said arm (31) is able to rotate, parallel to a rotation axis of tracks(41) and perpendicular to the direction along with tracked vehicle moves
• a plurality of rotary means (33a) installed on a second end (31b) of said arm (31);
said rotary means (33a):
- adapted for resting upon at least a portion o fan obstacle to said tracked vehicle (40); and
- being positioned between the two ends of a track(41) at a distance with respect to an end of said tracks (41) smaller than the distance of a centre of gravity of said tracked vehicle (40) from said end of said tracks (41);
- are able to rotate on respective parallel axes parallel to said axis (x); **characterized in that** said low friction means (33a) are fixed to said rotary arm (31) by a support element (33), fixed to said second end (31b) of rotary arm (31), comprising a first and second bracket (34, 35) each having a first portion (34a, 35a) rectilinear and second portion semicircular (34b, 35b), and fixed to a second end of the first portion (34a, 35a);
said first and second bracket are mounted to lay on two mutuallyspaced parallel planes perpendicular to said axis (X), in order to house said rotary means, which are mounted along said second portion (34b, 35b).

9. Tracked vehicle (40) according to claim 8, in which such driving pulley (43) is actuated by a motor of electric kind or an endothermic motor.

10. Tracked vehicle according to claim 8, in which said rotary means (33a) are rolls.

11. Tracked vehicle according to claim 8, in which such rotary means (33a) are wheels.

12. Tracked vehicle according to claim 8, in which said rotary means (33a) rotate on a respective axis parallel to the rotation axis of said tracks (41).

13. Tracked vehicle according to claim 8, also comprising an extinguishing and pushing device, for exerting a pushing force on said rotary means (33a); said pushing force being oriented in a direction orthogonal with respect to the direction defined by a rotation axis of said arm (31).

## Patentansprüche

1. Auslöschungsvorrichtung (30) für Stöße eines Gleiskettenfahrzeugs (40), das mehrere Gleisketten (41) hat,
wobei die Vorrichtung (30), die dafür ausgelegt ist, die Schläge oder Stöße zu verringern, die sich aus dem Überwinden eines Hindernisses mit einer Form von einer Stufe oder Ähnlichem durch das Gleiskettenfahrzeug (40) ergeben, wenigstens an einem Abschnitt der mehreren Gleisketten (41) des Gleiskettenfahrzeug (40) angebaut ist,
wobei die Vorrichtung (30) Folgendes umfasst:
einen drehenden starren Arm (31), der ein erstes Ende (31a) hat, an dem eine Welle (32) zentriert ist, versehen mit einer jeweiligen Achse (X), um die sich der Arm (31) drehen kann, parallel zu einer Drehachse der Gleisketten (41) und senkrecht zu der Richtung, entlang derer sich das Gleiskettenfahrzeug bewegt, und
mehrere reibungsarme Mittel (33a), die an einem zweiten Ende (31b) des Arms (31) angebaut sind,
wobei die reibungsarmen Mittel (33a):
dafür ausgelegt sind, auf wenigstens einem Abschnitt eines Hindernisses für das Gleiskettenfahrzeug (40) aufzuliegen, und
zwischen den zwei Enden einer Gleiskette (41) angeordnet sind, bei einer Entfernung in Bezug auf ein Ende der Gleisketten (41), die kleiner ist als die Entfernung eines Schwerpunktes des Gleiskettenfahrzeugs (40) von dem Ende der Gleisketten (41),
drehende Mittel sind, die sich auf jeweiligen Achsen, parallel zu der Achse (X), drehen können,
**dadurch gekennzeichnet, dass** die reibungsarmen Mittel (33a) an dem zweiten Ende (31b) des drehenden Arms (31) befestigt sind durch ein Stützelement (33), das eine erste und eine zweite Stütze (34, 35) umfasst, die jede einen ersten Abschnitt (34a, 35a), der geradlinig, und einem zweiten Abschnitt (34b, 35b), der halbkreisförmig und an einem zweiten Ende des ersten Abschnitts (34a, 35a) befestigt ist, hat,
wobei die erste und die zweite Stütze so angebracht sind, dass sie auf zwei mit Abstand zueinander angeordneten parallelen Ebenen, senkrecht zu der Achse (X), liegen, um die reibungsarmen Mittel aufzunehmen, die entlang des zweiten Abschnitts (34b, 35b) angebracht sind.

2. Vorrichtung nach Anspruch 1, wobei die drehenden Mittel (33a) Rollen sind.

3. Vorrichtung nach Anspruch 1, wobei die drehenden Mittel (33a) Räder sind.

4. Vorrichtung nach Anspruch 1, wobei sich die drehenden Mittel (33a) auf einer jeweiligen Achse, parallel zu der Drehachse der Gleisketten (41), drehen.

5. Vorrichtung nach Anspruch 1, die ebenfalls eine Auslöschungs- und Schubvorrichtung (10) umfasst, um eine Schubkraft auf die drehenden Mittel (33a) auszuüben, wobei die Schubkraft in einer Richtung, senkrecht in Bezug auf die durch eine Drehachse des Arms (31) gegebene Richtung, ausgerichtet ist.

6. Vorrichtung nach Anspruch 1, wobei die reibungsarmen Mittel gleitende Mittel sind.

7. Vorrichtung nach Anspruch 6, die ebenfalls eine Auslöschungs- und Schubvorrichtung umfasst, um eine Schubkraft auf die gleitenden Mittel auszuüben.

8. Gleiskettenfahrzeug (40), das Folgendes umfasst:
wenigstens ein Paar von Gleisketten (41), zueinander parallel und jeweils auf einer linken Seite und/oder einer rechten Seite des Gleiskettenfahrzeugs (40) angeordnet,
eine Antriebsscheibe für die Drehung der Gleisketten (41) und
einen Schwerpunkt (50), der bei einer ersten Entfernung (d1) von einem vorderen Ende (41a) der Gleisketten (41) und bei einer zweiten Entfernung (d2) von einem hinteren Ende (41b) der Gleisketten (41) angeordnet ist,
wobei das Gleiskettenfahrzeug (40) eine Auslöschungsvorrichtung (30) für Stöße umfasst, die dafür ausgelegt ist, die Schläge oder Stöße zu verringern, die sich aus dem Überwinden eines Hindernisses mit einer Form von einer Stufe oder Ähnlichem durch das Gleiskettenfahrzeug (40) ergeben, wobei sie Folgendes umfasst:
einen drehenden starren Arm (31), der ein erstes Ende (31a) hat, an dem eine Welle (32) zentriert ist, versehen mit einer jeweiligen Achse (X), um die sich der Arm (31) drehen kann, parallel zu einer Drehachse der Gleisketten (41) und senkrecht zu der Richtung, entlang derer sich das Gleiskettenfahrzeug bewegt, mehrere drehende Mittel (33a), die an einem zweiten Ende (31b) des Arms (31) angebaut sind,
wobei die drehenden Mittel (33a):
dafür ausgelegt sind, auf wenigstens einem Abschnitt eines Hindernisses für das Gleiskettenfahrzeug (40) aufzuliegen, und
zwischen den zwei Enden einer Gleiskette (41) angeordnet sind, bei einer Entfernung in Bezug auf ein Ende der Gleisketten (41), die kleiner ist als die Entfernung eines Schwerpunktes des Gleiskettenfahrzeugs (40) von dem Ende der Gleisketten (41),
sich auf jeweiligen Achsen, parallel zu der Achse (X), drehen können,
**dadurch gekennzeichnet, dass** die reibungsarmen Mittel (33a) an dem drehenden Arm (31) befestigt sind durch ein an dem zweiten Ende (31b) des drehenden Arms (31) befestigtes Stützelement (33), das eine erste und eine zweite Stütze (34, 35) umfasst, die jede einen ersten Abschnitt (34a, 35a), der geradlinig, und einem zweiten Abschnitt (34b, 35b), der halbkreisförmig und an einem zweiten Ende des ersten Abschnitts (34a, 35a) befestigt ist, hat,
wobei die erste und die zweite Stütze so angebracht sind, dass sie auf zwei mit Abstand zueinander angeordneten parallelen Ebenen, senkrecht zu der Achse (X), liegen, um die drehenden Mittel aufzunehmen, die entlang des zweiten Abschnitts (34b, 35b) angebracht sind.

9. Gleiskettenfahrzeug (40) nach Anspruch 8, wobei eine solche Antriebsscheibe (43) durch einen Elektromotor oder einen endothermen Motor betätigt wird.

10. Gleiskettenfahrzeug nach Anspruch 8, wobei die drehenden Mittel (33a) Rollen sind.

11. Gleiskettenfahrzeug nach Anspruch 8, wobei die drehenden Mittel (33a) Räder sind.

12. Gleiskettenfahrzeug nach Anspruch 8, wobei sich die drehenden Mittel (33a) auf einer jeweiligen Achse, parallel zu der Drehachse der Gleisketten (41), drehen.

13. Gleiskettenfahrzeug nach Anspruch 8, das ebenfalls eine Auslöschungs- und Schubvorrichtung umfasst, um eine Schubkraft auf die drehenden Mittel (33a) auszuüben, wobei die Schubkraft in einer Richtung, senkrecht in Bezug auf die durch eine Drehachse des Armes (31) gegebene Richtung, ausgerichtet ist.

## Revendications

1. Dispositif amortisseur (30) des secousses d'un véhicule à chenilles (40) ayant une pluralité de chenilles (41) ;
le dispositif (30) étant conçu pour réduire les chocs ou les secousses causés par le passage du véhicule à chenilles (40) par-dessus un obstacle ayant une forme d'escalier ou similaire, étant installé au moins sur une partie de ladite pluralité de chenilles (41) dudit véhicule à chenilles (40) ;
ledit dispositif (30) comprenant :
. un bras rotatif rigide (31) ayant une première extrémité (31a) sur laquelle est centré un arbre (32), muni d'un axe respectif (X) autour duquel ledit bras (31) est capable de tourner, parallèlement à un axe de rotation des chenilles (41) et perpendiculairement à la direction suivant laquelle le véhicule à chenilles se déplace et
. une pluralité de moyens à frottement réduit (33a) installés sur une seconde extrémité (31b) dudit bras (31) ;
lesdits moyens à frottement réduit (33a) :
- étant conçus pour reposer sur au moins une partie d'un obstacle s'opposant au dit véhicule à chenilles (40) ; et
- étant positionnés entre les deux extrémités d'une chenille (41), à une distance d'une extrémité desdites chenilles (41) inférieure à la distance d'un centre de gravité dudit véhicule à chenilles (40) par rapport à ladite extrémité desdites chenilles (41) ;
- sont des moyens rotatifs capables de tourner sur des axes respectifs parallèles au dit axe (X)
**caractérisé en ce que** lesdits moyens à frottement réduit (33a) sont fixés à ladite seconde extrémité (31b) du bras rotatif (31) par un élément de support (33) comprenant une première et une seconde équerres (34, 35), chacune ayant une première partie (34a, 35a) rectiligne et une seconde partie semi-circulaire (34b, 35b) et fixés à une seconde extrémité de la première partie (34a, 35a) ;
lesdites première et seconde équerres sont montées pour s'appuyer sur deux plans parallèles espacés l'un de l'autre perpendiculaires au dit axe (X) afin de loger lesdits moyens à frottement réduit qui sont montés le long de ladite seconde partie (34b, 35b).

2. Dispositif selon la revendication 1, dans lequel lesdits moyens rotatifs (33a) sont des rouleaux.

3. Dispositif selon la revendication 1, dans lequel lesdits moyens rotatifs (33a) sont des roues.

4. Dispositif selon la revendication 1, dans lequel lesdits moyens rotatifs (33a) tournent sur un axe respectif parallèle à l'axe de rotation desdites chenilles (41).

5. Dispositif selon la revendication 1, comprenant également un dispositif amortisseur et pousseur (10), permettant d'exercer une force de poussée sur lesdits moyens rotatifs (33a) ; ladite force de poussée étant orientée dans une direction orthogonale par rapport à la direction donnée par un axe de rotation dudit bras (31).

6. Dispositif selon la revendication 1, dans lequel lesdits moyens à frottement réduit sont des moyens coulissants.

7. Dispositif selon la revendication 6, comprenant également un dispositif amortisseur et pousseur, permettant d'exercer une force de poussée sur lesdits moyens coulissants.

8. Véhicule à chenilles (40) comprenant :
- au moins une paire de chenilles (41), parallèles l'uns à l'autre et placées respectivement sur le côté gauche ou sur le côté droit dudit véhicule à chenilles (40) ;
- une poulie d'entraînement pour la rotation desdites chenilles (41) ;
et
- un centre de gravité (50), positionné à une première distance (d1) d'une extrémité avant (41a) desdites chenilles (41) et à une seconde distance (d2) d'une extrémité arrière (41b) desdites chenilles (41) ;
le véhicule à chenilles (40) comprend un dispositif amortisseur (30) de secousses, conçu pour réduire les chocs ou les secousses causés par le passage du véhicule à chenilles (40) par-dessus un obstacle ayant une forme d'escalier ou similaire, comprenant :
. un bras rotatif rigide (31) ayant une première extrémité (31a) sur laquelle est centré un arbre (32) muni d'un axe respectif (X) autour duquel ledit bras (31) est capable de tourner, parallèle à un axe de rotation des chenilles (41) et perpendiculaire à la direction suivant laquelle le véhicule à chenilles se déplace
. une pluralité de moyens rotatifs (33a) installés sur une seconde extrémité (31b) dudit bras (31) ;
lesdits moyens rotatifs (33a) :
- étant conçus pour reposer sur au moins une partie d'un obstacle s'opposant au dit véhicule à chenilles (40) ; et
- étant positionnés entre les deux extrémités d'une chenille (41) à une distance d'une extrémité desdites chenilles (41) inférieure à la distance d'un centre de gravité dudit véhicule à chenilles (40) par rapport à ladite extrémité desdites chenilles (41) ;
- sont capables de tourner sur un axe parallèle respectif parallèle au dit axe (X) ;
**caractérisé en ce que** lesdits moyens à frottement réduit (33a) sont fixés sur ledit bras rotatif (31) par un élément de support (33), fixé sur ladite seconde extrémité (31b) du bras rotatif (31), comprenant une première et une seconde équerres (34, 35) ayant chacune une première partie (34a, 35a) rectiligne et une seconde partie semi-circulaire (34b, 35b) et fixées sur une seconde extrémité de la première partie (34a, 35a) ;
- lesdites première et seconde équerres sont montées pour s'appuyer sur deux plans parallèles espacés l'un de l'autre perpendiculaires au dit axe (X), afin de loger lesdits moyens rotatifs, qui sont montés le long de ladite seconde partie (34b, 35b).

9. Véhicule à chenilles (40) selon la revendication 8, dans lequel, cette poulie d'entraînement (43) est actionnée par un moteur de type électrique ou un moteur endothermique.

10. Véhicule à chenilles selon la revendication 8, dans lequel lesdits moyens rotatifs (33a) sont des rouleaux.

11. Véhicule à chenilles selon la revendication 8, dans lequel ces moyens rotatifs (33a) sont des roues.

12. Véhicule à chenilles selon la revendication 8, dans lequel lesdits moyens rotatifs (33a) tournent sur un axe respectif parallèle à l'axe de rotation desdites chenilles (41).

13. Véhicule à chenilles selon la revendication 8, comprenant également un dispositif amortisseur et pousseur, permettant d'exercer une force de poussée sur lesdits moyens rotatifs (33a) ; ladite force de poussée étant orientée dans une direction orthogonale par rapport à la direction définie par un axe de rotation dudit bras (31).
